(19) Europäisches Patentamt
European Patent Office
Office européen des brevets

(11) **EP 2 132 923 B1**

(12) **FASCICULE DE BREVET EUROPEEN**

(45) Date de publication et mention de la délivrance du brevet:
**13.03.2019 Bulletin 2019/11**

(21) Numéro de dépôt: **07871939.0**

(22) Date de dépôt: **14.12.2007**

(51) Int Cl.:
*H04N 1/60* *(2006.01)*    *H04N 9/64* *(2006.01)*

(86) Numéro de dépôt international:
**PCT/FR2007/052523**

(87) Numéro de publication internationale:
**WO 2008/122700 (16.10.2008 Gazette 2008/42)**

(54) **PROCÉDÉS ET SYSTÈMES POUR LES AFFICHAGES DE CORRECTION CHROMATIQUE AVEC DES GAMMES CHROMATIQUES DIFFERENTES**

VERFAHREN UND VORRINCHTUNG FUR ANZEIGE DER FARBKORREKTUR MIT VERSCHIEDEN FARBTONBEREICH

METHODS AND SYSTEMS FOR DISPLAYS WITH CHROMATIC CORRECTION WITH DIFFERING CHROMATIC RANGES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.04.2007 US 921579 P**

(43) Date de publication de la demande:
**16.12.2009 Bulletin 2009/51**

(73) Titulaire: **InterDigital Madison Patent Holdings 75017 Paris (FR)**

(72) Inventeurs:
• **DOSER, INGO**
**78166 Donaueschingen (DE)**
• **STAUDER, JURGEN**
**35440 Montreuil/Ille (FR)**
• **LEE, BONGSUN**
**La Crescenta, California 91214 (US)**

(74) Mandataire: **Novagraaf Technologies 12 place des Halles Saint Louis 56100 Lorient (FR)**

(56) Documents cités:
**EP-A- 1 578 140       US-A1- 2002 120 781
US-A1- 2005 152 597   US-A1- 2005 152 612**

**Description**

Cette demande revendique le bénéfice de la demande provisoire US de numéro de série 60/921 579, déposée le 3 avril 2007.

Les présents principes concernent généralement des écrans de télévision et, plus particulièrement, des procédés et des systèmes pour une correction chromatique afin d'obtenir des résultats prévisibles sur des écrans d'affichages avec des gammes chromatiques différentes.

Dans l'industrie cinématographique d'aujourd'hui, les couleurs d'un contenu cinématographique sont en général graduées pour des affichages avec une gamme chromatique unique définie par des couleurs de luminophores de tube cathodique (CRT), correspondant à la norme chromatique soit de l'Union européenne de diffusion (EBU), soit de la Société des ingénieurs du cinéma et de la télévision (SMPTE-C) pour la définition de normes, et des 709 couleurs pour la haute définition de l'Union internationale des télécommunications (ITU). Celles-ci sont les normes actuelles pour l'utilisation dans la détermination de la gamme chromatique de référence (RCG) pour des affichages. Cependant, des écrans d'affichages avec des gammes chromatiques non standard sont actuellement courants parmi les consommateurs de contenu cinématographique.

En cas d'édition des couleurs d'une image sur un affichage avec une gamme chromatique de référence autre que la gamme chromatique de l'affichage cible, les couleurs résultantes peuvent paraître insatisfaisantes sur l'affichage cible. Pour illustrer des cas où les couleurs résultantes peuvent paraître insatisfaisantes, les deux cas suivants sont décrits.

Le premier cas concerne des écrans d'affichage grand public ayant des gammes chromatiques grossièrement de la même taille que l'affichage de référence, mais les couleurs primaires d'affichage ne sont pas égales aux couleurs primaires d'affichage de l'écran d'affichage de référence pendant la création du contenu. Dans ces circonstances, il est souhaitable de garantir que les couleurs puissent être représentées précisément sur les écrans d'affichages grand public.

Le second cas concerne l'existence actuelle d'écrans d'affichages à gamme chromatique étendue étant utilisés sur le terrain. Dans ces circonstances, aucun procédé n'existe pour corriger chromatiquement les écrans d'affichage grand public par rapport à ces affichages à gamme chromatique étendue. Par exemple, ces affichages grand public peuvent utiliser une gamme chromatique de référence différente mais peuvent être susceptibles ou non d'afficher seulement des couleurs en accord avec les normes de gamme chromatique étendue.

Il existe une analogie à la situation lorsque la télévision couleur a été introduite initialement aux États-Unis. Beaucoup d'ensembles différents de couleurs primaires ont été utilisés à cette époque qui ne permettaient pas une colorimétrie unifiée. Cependant, l'accumulation par un des principaux fabricants de postes de télévision d'une quantité significative de luminophores produits par un fabricant particulier de luminophores a conduit à la formation effective d'une quasi-norme et, ensuite, finalement d'une norme (SMPTE-C). Cependant la Commission fédérale des communications (FCC) n'a jamais adopté celle-ci et l'industrie de fabrication de postes de télévision doit vivre avec cette dichotomie. Il a existé des tentatives par la Société des ingénieurs du cinéma et de la télévision (SMPTE) d'émuler les couleurs du Comité national de système de télévision (NTSC) sur un moniteur SMPTE-C qui a finalement échoué pour des raisons technologiques à cette époque.

La gamme chromatique d'un affichage est déterminée par la technologie d'affichage choisie. En ce moment, un client a le choix entre les technologies suivantes (également qualifiées dans la présente de « type d'affichage ») comprenant, par exemple, un affichage à cristaux liquides (LCD), un affichage à plasma, un affichage à tube cathodique (CRT), un affichage à traitement numérique de la lumière (DLP), et un affichage réflecteur sur cristal de silicium (SXRD). Cependant, il peut exister des différences significatives entre des technologies d'affichage différentes, ainsi qu'entre deux représentants de la même technologie d'affichage. Par exemple, deux ensembles d'affichages à cristaux liquides peuvent être équipés avec des ensembles différents de sources lumineuses. Un de ces ensembles de sources lumineuses peut être constitué de lampes fluorescentes à cathode froide (CCFL), où la gamme chromatique dépend principalement des luminophores utilisés. Historiquement, ces sources lumineuses ne permettaient pas l'utilisation d'une gamme chromatique haute définition. En fait, les affichages qui utilisaient ces sources lumineuses ne pouvaient pas reproduire toutes les 709 couleurs, selon la norme de 709 couleurs de l'Union internationale des télécommunications (ITU) pour la haute définition. Cependant, des développements récents ont amené des produits sur le marché qui utilisent des dites lampes fluorescentes à cathode froide à gamme étendue (W-CCFL), où la gamme chromatique est encore plus importante que la gamme de 709 couleurs. Un autre composant de la technologie d'affichage à cristaux liquides est constitué de filtres colorés, qui pourraient être conçus pour avoir une sortie lumineuse élevée et, donc, une efficacité lumineuse élevée avec une gamme chromatique étroite, ou pourraient être conçus pour avoir une efficacité lumineuse luminescente et une gamme chromatique élargie. Une autre tendance est que des unités de rétroéclairage (BLU) CCFL d'un affichage LCD soient remplacées par des BLU à LED (diodes électroluminescentes) RGB avec une gamme chromatique encore plus élevée.

Des affichages à traitement numérique de la lumière et des affichages réflecteurs sur cristal de silicium (comprenant la projection arrière) sont des affichages réflecteurs qui filtrent la lumière provenant d'une source lumineuse.

Actuellement, il existe des techniques différentes pour augmenter la gamme chromatique de ces dispositifs. En fait, à partir de maintenant, certains des affichages employant ces techniques différentes ont déjà une gamme chromatique augmentée par comparaison à la gamme chromatique de référence applicable actuelle.

Avec l'arrivée des affichages à gamme étendue, il est devenu possible d'afficher une plage de couleurs élargie qui n'était pas possible précédemment. Les contenus vidéo actuels sur des disques vidéo numériques (DVD), des programmes de télévision et/ou par l'intermédiaire de la vidéo sur le protocole Internet (VOIP) sont codés dans un espace colorimétrique avec une gamme chromatique de référence et, donc, suivent les règles qui ont été définies il y a plusieurs années lorsque l'affichage de gamme chromatique étendue n'était pas faisable. En fait, jusqu'à récemment, il était même difficile d'obtenir une reproduction de la gamme chromatique de référence actuelle.

Comme il apparaît aujourd'hui, la situation a changé. Une gamme chromatique étendue est faisable et il existe un souhait d'utiliser la gamme chromatique élargie. Cependant, au lieu de choisir un autre ensemble de couleurs primaires de gamme chromatique étendue, la tendance actuelle qui semblait être préférée est l'utilisation de normes chromatiques ouvertes, non restrictives. Un exemple d'une telle norme est XYZ pour le cinéma numérique ou xvYCC (IEC 61966-2-3) pour la télévision grand public. D'autres exemples comprennent, par exemple, sYCC (Commission internationale électrotechnique (IEC) 61966-2-1), ITU-R BT.1361, ou e-sRGB (Association des fabricants d'imagerie et de photographie (PIMA) 7667) pour les graphiques informatiques et la photographie d'images fixes.

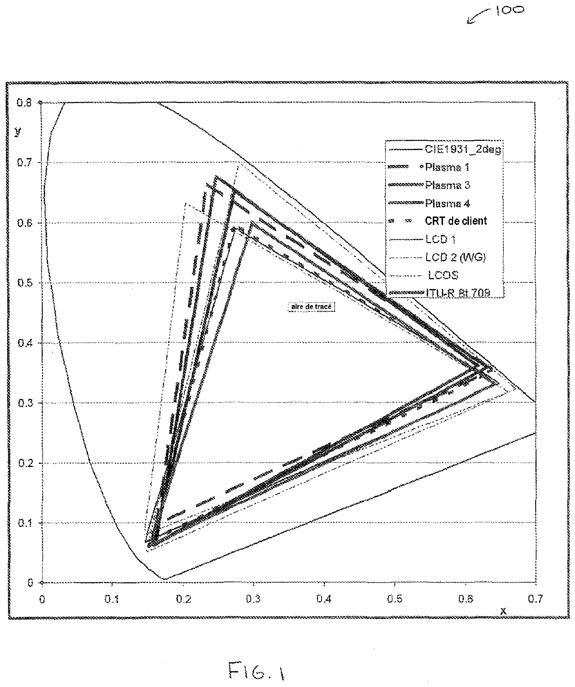

Au même moment, il existe une variation significative dans les gammes chromatiques utilisées dans les divers affichages disponibles actuellement. Jusqu'à récemment, la gamme chromatique a été déterminée plus ou moins par les luminophores de tube cathodique standard. Aujourd'hui, la plage de couleurs susceptible d'être affichée dépend de la technologie d'affichage utilisée et de la conception du matériel, comme décrit ci-dessus. En référence à la figure 1, des mesures de gamme chromatique des affichages disponibles actuellement sont indiquées généralement par le numéro de référence 100. Comme il est évident, il existe actuellement une quantité significative de différences entre les mesures de gammes chromatiques disponibles actuelles 100. Il doit être noté qu'aucune des gammes chromatiques des divers affichages disponibles n'est égale à la gamme chromatique de référence du matériau source qui, dans cet exemple, correspond à ITU-R Bt. 709. Par rapport à la figure 1, l'affichage avec la gamme chromatique la plus large était un affichage à cristaux liquides sur silicium (LCOS) en cours d'essai, avec un vert jaunissant, et un affichage à cristaux liquides (LCD) avec un rétroéclairage de gamme étendue avec un vert cyanique.

De plus, les affichages actuels semblent remplacer simplement les couleurs primaires de référence spécifiées par la norme applicable par les couleurs primaires correspondant à l'affichage respectif (par exemple, un type d'affichage respectif, une gamme chromatique respective mise en oeuvre sur cet affichage, et ainsi de suite), similaires au passé et l'utilisation de luminophores de tube cathodique différents. En conséquence, des couleurs n'apparaissent pas comme elles devraient. Autrement dit, des couleurs apparaissent différemment de ce qui était prévu pour leur apparence. Par exemple, des sapins ressemblent à des pins, des tomates ressemblent à des oranges, et ainsi de suite. Cependant le mappage des couleurs primaires est la solution la plus primitive et la moins chère de mappage de gamme.

Dans le cas d'un matériau de gamme étendue sur un affichage de gamme étendue, il existe encore un problème où des couleurs peuvent être affichées incorrectement en raison de la gamme chromatique du matériau de gamme étendue qui est différente de la gamme chromatique de l'affichage à gamme étendue. En fait, en utilisant les normes chromatiques non restrictives mentionnées ci-dessus comme xvYCC ou XYZ, il est toujours possible qu'une couleur soit transmise mais ne puisse pas être affichée sur un ou plusieurs affichages particuliers à gamme étendue.

Un procédé pour une correction chromatique implique le matriçage 3x3 des couleurs primaires sources sur les couleurs primaires de l'affichage (qui, cependant, demande une linéarisation préalable du signal vidéo). Cette solution présente des problèmes lorsque des couleurs sont transmises qui sont au-delà de la gamme chromatique de la gamme chromatique de l'affichage. En guise d'exemple, considérons un affichage avec trois couleurs primaires de rouge, vert et bleu, où la couleur à afficher peut être une couleur verte (par exemple, une variation de la couleur primaire verte), et que cette couleur peut être en dehors de la plage d'affichage. Le résultat typique d'une telle situation est que la couleur à afficher peut être découpée sur ses plages maximales respectives. Le problème se manifestera par une reproduction chromatique erronée, par une erreur de teinte, de saturation et également de luminosité. L'effet néfaste sera encore pire si la couleur apparaît dans une gradation (par exemple, comme constaté le plus souvent dans des films d'animation), lorsqu'un contour erroné apparaît également. Un contour erroné est l'apparition d'une structure ou d'un objet erroné(e) sur l'image à la suite d'artefacts dans le traitement du signal vidéo ou dans l'affichage.

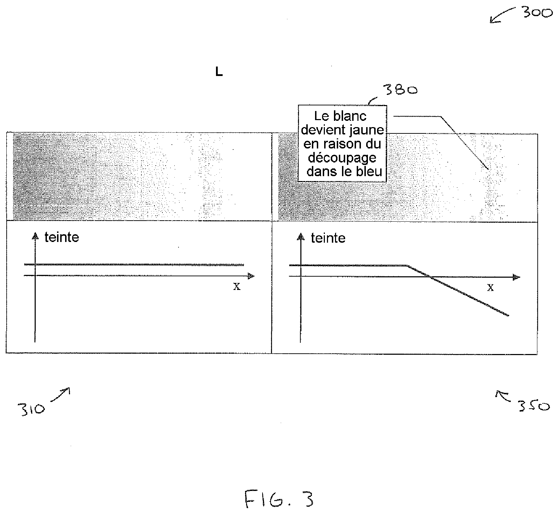

Considérons un autre exemple, comme suit. Une couleur blanche « cyanisante » est définie comme suit : bleu = max ; rouge = 0,8*max ; et vert = max ; sur un affichage de gamme étendue, où « max » représente la valeur permissible maximale. Sur un affichage de gamme étroite qui a un bleu moins saturé, ceci aboutira à un découpage du bleu, et le blanc deviendra verdâtre. Ce problème est illustré sur la figure 3. En référence à la figure 3, un changement de teinte sur une gradation blanche bleuissante due à une restriction de gamme chromatique est indiqué généralement par le numéro de référence 300. En particulier, le résultat souhaité est représenté sur la partie gauche de la figure 3 et est désignée par le numéro de référence 310, tandis que le résultat réel est représenté sur la partie droite de la figure 3 et est désignée par le numéro de référence 350. Comme indiqué par le numéro de référence 380 et le texte correspondant, le blanc devient jaune en raison du découpage dans le bleu.

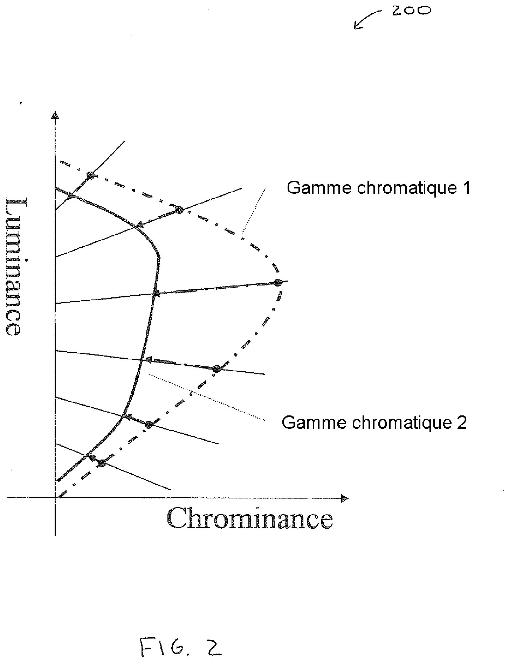

Il est par conséquent essentiel qu'une solution adéquate de mappage de gamme chromatique soit utilisée pour rendre des couleurs sur l'affichage utilisé. En référence à la figure 2, un mappage de gamme chromatique exemple est indiqué généralement par le numéro de référence 200. La figure 2 représente une « gamme chromatique 1 » et une « gamme chromatique 2 » comme une section transversale, où la « gamme chromatique 1 » est mappée dans la « gamme chromatique 2 » au moyen d'un mappage de gamme chromatique. Dans le mappage de gamme chromatique 100, la variation dans la luminance est représentée par rapport à l'axe vertical (généralement indiqué par l'axe Y), et la variation dans la chrominance est représentée par rapport à l'axe horizontal (généralement indiqué par l'axe X). L'exemple fourni est pour une « gamme chromatique 2 » plus étroite que la « gamme chromatique 1 ». Cependant, il faut être conscient que le cas opposé est également possible, où la « gamme chromatique 2 » est plus large que la « gamme chromatique 1 ».

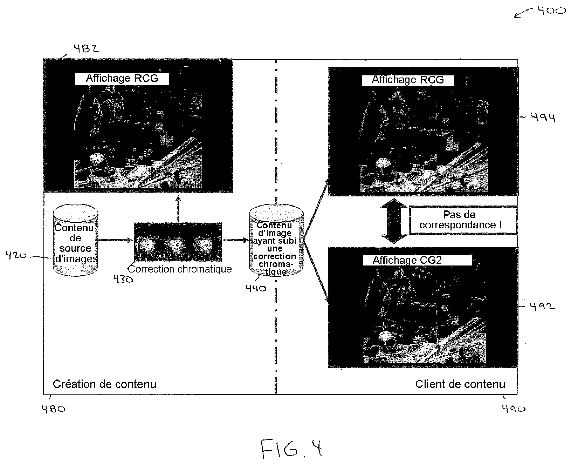

En référence à la figure 4, un exemple de diagramme de haut niveau représentant le flux de production pour une correction chromatique à l'aide d'un affichage ayant une gamme chromatique de référence pour un contenu qui peut être affiché ultérieurement sur un affichage avec une gamme chromatique différente de la gamme chromatique de référence est indiqué généralement par le numéro de référence 400.

Le résultat indésirable du flux de production de correction chromatique 400 de la figure 4 est que lors d'une correction chromatique sur un affichage avec un affichage chromatique de référence (RCG), les couleurs sur un affichage avec une seconde gamme chromatique ou la gamme chromatique 2 (CG2) seront reproduites incorrectement.

Le flux de production de correction chromatique 400 implique un côté de création de contenu 480 et un côté de consommation de contenu 490. Un affichage RCG 482 est utilisé sur le côté de création de contenu 480. Un affichage RCG 492 et un affichage CG2 494 sont utilisés sur le côté de consommation de contenu 590.

Le contenu d'images source peut être stocké, par exemple, dans un magasin de contenu de d'images source 420. Le contenu d'image ayant subi une correction chromatique peut être stocké, par exemple, dans un magasin de contenu d'image ayant subi une correction chromatique 440.

Un module de correction chromatique 430 génère le contenu qui apparaît correct seulement sur un affichage du même type et avec la même gamme chromatique. Ainsi, les couleurs sur l'affichage CG2 n'apparaîtront pas les mêmes que les couleurs qui ont été corrigées chromatiquement sur l'affichage RCG. Il est très probable qu'au moins certaines des couleurs sur l'affichage RCG2 seront découpées et au moins certaines seront affichées avec la teinte erronée.

Le problème est illustré sur la figure 4 à l'aide de « l'image de ski », qui fait partie des images d'essai CIE-TC8-03 dans leurs « Guidelines for the Evaluation of Gamut Mapping Algorithms ». Avec l'aimable autorisation de Fujifilm Electronic Imaging Ltd. (UK). Comme nous pouvons le constater, sur le côté de consommation de contenu, l'image peut être récupérée correctement seulement sur un affichage avec RCG. L'image apparaîtra incorrecte et présentera les artefacts mentionnés ci-dessus si un affichage avec une gamme chromatique non égale à RCG (CG2) est utilisée pour l'affichage.

Le document US2005/152612 décrit un algorithme d'amélioration d'image pour des images numériques qui identifie d'abord un espace de couleur d'entrée puis applique une transformation d'espace de couleur pour reproduire une image numérique dans un espace de couleurs de référence.

Le document EP1578140 concerne un système de traitement des couleurs comprenant un dispositif de capture d'image pour la capture d'une scène et la production de données d'image couleur représentatives de la scène. Un transformateur d'espace de couleur est couplé au dispositif de capture d'image pour transformer les premières données d'image couleur en des secondes données d'image couleur. Le transformateur de couleur comprend un processeur programmé pour réaliser une opération matricielle sur les premières données d'image par la sélection d'éléments matriciels dans une table de consultation (LUT) comprenant des valeurs pré calculées.

Ces inconvénients et ces désavantages et d'autres de l'art antérieur sont traités par les présents principes, qui concerne des procédés et des systèmes pour une correction chromatique afin d'obtenir des résultats prévisibles sur des affichages avec des gammes chromatiques différentes.

Selon un aspect des présents principes, il est proposé un procédé pour une correction chromatique. Le procédé comprend la réalisation d'une correction chromatique sur un contenu d'image source, à l'aide au moins d'un parmi un affichage de type non-référence ayant une gamme chromatique de non-référence et un affichage de type référence ayant une gamme chromatique de référence. L'étape de réalisation comprend la re-formation du contenu d'image source pour fournir un contenu d'image re-formé ayant subi une correction chromatique pour l'affichage sur les affichages de type non-référence ayant une gamme chromatique de non-référence. L'étape de réalisation comprend en outre la génération de métadonnées pour un mappage de gamme chromatique qui transforme chromatiquement le contenu d'image re-formé ayant subi une correction chromatique pour l'affichage sur des affichages de type référence ayant une gamme chromatique de référence. Le contenu d'image source est re-formé seulement pour les affichages de type non-référence ayant la gamme chromatique de non-référence.

Selon un autre aspect des présents principes, il est proposé un procédé pour une correction chromatique. Le procédé comprend la réalisation d'une correction chromatique sur un contenu d'image source, à l'aide au moins d'un parmi un affichage de type non-référence ayant une gamme chromatique de non-référence et un affichage de type référence ayant une gamme chromatique de référence. L'étape de réalisation comprend la re-formation du contenu d'image source pour fournir un contenu d'image re-formé ayant subi une correction chromatique pour l'affichage sur les affichages de type non-référence ayant une gamme chromatique de non-référence. L'étape de réalisation comprend en outre la re-formation du contenu d'image source pour fournir un contenu d'image re-formé ayant subi une correction chromatique pour l'affichage sur les affichages de type référence ayant une gamme chromatique de référence, à l'aide d'un mappage de gamme chromatique appliqué au contenu d'image re-formé ayant subi une correction chromatique pour l'affichage sur les affichages de type non-référence ayant la gamme chromatique de non-référence.

Selon encore un aspect des présents principes, il est proposé un système pour une correction chromatique. Le système comprend un module de correction chromatique pour réaliser une correction chromatique sur un contenu d'image source, à l'aide au moins d'un parmi un affichage de type non-référence ayant une gamme chromatique de non-référence et un affichage de type référence ayant une gamme chromatique de référence, pour fournir un contenu d'image re-formé ayant subi une correction chromatique pour l'affichage sur les affichages de type non-référence ayant une gamme chromatique de non-référence. Le système comprend en outre un module de mappage de gamme chromatique pour réaliser un mappage de gamme chromatique afin de générer des métadonnées pour un mappage de gamme chromatique ultérieur qui transforme chromatiquement le contenu d'image re-formé ayant subi une correction chromatique pour l'affichage sur des affichages de type référence ayant une gamme chromatique de référence. Le contenu d'image source est re-formé seulement pour les affichages de type non-référence ayant la gamme chromatique de non-référence.

Selon toujours un autre aspect des présents principes, il est proposé un système pour une correction chromatique. Le système comprend un module de correction chromatique pour réaliser une correction chromatique sur un contenu d'image source, à l'aide au moins d'un parmi un affichage de type non-référence ayant une gamme chromatique de non-référence et un affichage de type référence ayant une gamme chromatique de référence, pour fournir un contenu d'image re-formé ayant subi une correction chromatique pour l'affichage sur les affichages de type non-référence ayant une gamme chromatique de non-référence. Le système comprend en outre un module de mappage de gamme chromatique pour réaliser un mappage de gamme chromatique concernant le contenu d'image re-formé ayant subi une correction chromatique pour l'affichage sur les affichages de type non-référence a yant une gamme chromatique de non-référence pour fournir un contenu d'image re-formé ayant subi une correction chromatique pour l'affichage sur les affichages de type référence ayant une gamme chromatique de référence.

Ces aspects, ces fonctionnalités et ces avantages et d'autres des présents principes découleront de la description détaillée suivante de modes de réalisation exemplaires, qui doit être lue en liaison avec les dessins d'accompagnement.

Les présents principes peuvent être mieux compris en accord avec les figures exemplaires suivantes, sur lesquelles :

la figure 1 est un diagramme représentant des mesures de gamme chromatique d'écrans d'affichages disponibles actuellement, selon l'art antérieur ;
la figure 2 est un diagramme représentant un mappage de gamme chromatique exemple, selon l'art antérieur ;
la figure 3 est un diagramme représentant un changement de teinte sur une gradation blanche bleuissante en raison d'une restriction de gamme chromatique, selon l'art antérieur ;
la figure 4 est un diagramme de haut niveau représentant le exemple de flux de production pour une correction chromatique à l'aide d'un affichage ayant une gamme chromatique de référence pour un contenu qui peut être affiché ultérieurement sur un affichage avec une gamme chromatique différente de la gamme chromatique de référence, selon l'art antérieur ;
la figure 5 est un diagramme de haut niveau représentant le exemple de flux de production pour une correction chromatique afin d'obtenir un maître pour des affichages CG2 et des métadonnées pour des affichages RCG, selon un mode de réalisation des présents principes ;
la figure 6 est un diagramme de haut niveau représentant le exemple de flux de production pour une correction chromatique afin d'obtenir un maître pour des affichages CG2 et un maître pour des affichages RCG, selon un mode de réalisation des présents principes ;
la figure 7 est un diagramme de haut niveau représentant un autre exemple de flux de production pour une correction chromatique afin d'obtenir un maître pour des affichages CG2 et des métadonnées pour des affichages RCG, selon un mode de réalisation des présents principes ; et
la figure 8 est un diagramme de haut niveau représentant un autre exemple de flux de production pour une correction chromatique afin d'obtenir un maître pour des affichages CG2 et un maître pour des affichages RCG, selon un mode de réalisation des présents principes.

Les présents principes concernent des procédés et des systèmes pour une correction chromatique afin d'obtenir des résultats prévisibles sur des affichages avec des gammes chromatiques différentes.

La présente description illustre les présents principes. Il faudra donc être conscient que l'homme du métier sera en mesure d'imaginer divers agencements qui, bien que non explicitement décrits ou représentés dans la présente, incorporent les présents principes et sont compris dans sa portée.

Tous les exemples et le langage conditionnel exposés dans la présente sont destinés à des besoins pédagogiques pour aider le lecteur dans la compréhension des présents principes et des concepts apportés par l'inventeur ou les inventeurs à l'avancée de l'art, et doivent être interprétés comme étant sans limitation sur ces exemples et ces conditions exposés spécifiquement.

Ainsi, par exemple, il apparaîtra à l'homme du métier que les schémas de principe exposés dans la présente représentent des vues conceptuelles d'une circuiterie explicative incorporant les présents principes. De même, il apparaîtra que des organigrammes, des diagrammes de flux, des diagrammes de transition d'état quelconques, un pseudocode quelconque et similaires représentent divers processus qui peuvent être représentés pratiquement dans un support lisible par un ordinateur et donc exécutés par un ordinateur ou un processeur, que cet ordinateur ou ce processeur soit représenté explicitement ou non.

Les fonctions des divers éléments représentés sur les figures peuvent être produites grâce à l'utilisation d'un matériel dédié ainsi qu'à un matériel susceptible d'exécuter un logiciel en association avec un logiciel approprié. En cas de production par un processeur, les fonctions peuvent être produites par un processeur dédié unique, par un processeur partagé unique ou par une pluralité de processeurs individuels, dont certains peuvent être partagés. De plus, l'utilisation explicite du terme « processeur » ou « contrôleur » ne doit pas être interprétée comme se référant exclusivement à un matériel susceptible d'exécuter un logiciel, et peut comprendre implicitement, sans limitation, un matériel de processeur de signal numérique (« DSP »), une mémoire morte (« ROM ») pour stocker un logiciel, une mémoire vive (« RAM ») et un stockage non volatile.

D'autres matériels, conventionnels et/ou personnalisés, peuvent également être inclus. De même, des commutateurs quelconques représentés sur les figures sont seulement conceptuels. Leur fonction peut être réalisée grâce au fonctionnement d'une logique de programme, grâce à une logique dédiée, grâce à l'interaction d'une commande de programme et d'une logique dédiée, ou même manuellement, la technique particulière étant sélectionnable par le réalisateur comme il sera compris plus spécifiquement à partir du contexte.

Dans les revendications de ceux-ci, un élément quelconque exprimé comme un moyen pour réaliser une fonction spécifique est destiné à englober toute manière de réalisation de cette fonction comprenant, par exemple, a) une combinaison d'éléments de circuit qui réalise cette fonction ou b) un logiciel d'une forme quelconque, comprenant donc, un micrologiciel, un microcode ou similaire, combiné à une circuiterie appropriée pour exécuter ce logiciel afin de réaliser la fonction. Les présents principes tels que définis par ces revendications résident dans le fait que les fonctionnalités produites par les divers moyens exposés sont combinées et rassemblées de la manière demandée par les revendications. Il est donc considéré que des moyens quelconques qui peuvent obtenir ces fonctionnalités sont équivalents à ceux représentés dans la présente.

La référence dans la description à « un seul mode de réalisation » ou « un mode de réalisation » des présents principes signifie qu'une fonctionnalité, une structure, une caractéristique particulières et ainsi de suite décrites en liaison avec le mode de réalisation est comprise dans au moins un mode de réalisation unique des présents principes. Ainsi, les apparitions de l'expression « dans un seul mode de réalisation » ou « dans un mode de réalisation » apparaissant en divers endroits dans la description ne font pas toute référence au même mode de réalisation.

Comme utilisé dans la présente, l'acronyme « CG » indique une « gamme chromatique », l'acronyme « CGM » indique un « mappage de gamme chromatique », l'acronyme « RCG » indique une « gamme chromatique de référence » et l'acronyme « CG2 » indique une « gamme chromatique 2 ».

Également, comme utilisé dans la présente, l'expression « affichages RCG » fait référence à des affichages ayant un type de gamme indiqué comme une gamme chromatique de référence (RCG), tandis que l'expression « affichages CG2 » fait référence à des affichages ayant un type de gamme indiqué comme une seconde gamme chromatique, la seconde gamme chromatique étant différente de la gamme chromatique de référence.

Il faut être conscient que tandis que la description fournie dans la présente est pratiquement décrite relativement, par exemple, à une version d'image pour des affichages RCG, et une version d'image pour des affichages CG2, ou des métadonnées pour reconstruire l'image pour des affichages CG2, étant donné la variété des affichages de grande consommation disponibles, plus d'une version CG2 peut être générée, tout en conservant l'esprit des présents principes.

De plus, comme utilisée dans la présente, l'expression « gamme chromatique 709 » et des variations de celle-ci indiquent 709 couleurs qui, à leur tour, indiquent le cube chromatique défini par les trois couleurs primaires de luminophores et le point blanc défini dans ITU-R Bt.709.

Également, comme utilisée dans la présente, relativement à la transmission et la réception de métadonnées, l'expression « intra-bande » fait référence à la transmission et/ou la réception de ces métadonnées en même temps que le contenu d'image ayant subi une correction chromatique à afficher par un dispositif de consommation. En revanche, l'expression « hors-bande » fait référence à la transmission et/ou la réception des métadonnées séparément relativement au contenu d'image ayant subi une correction chromatique à afficher par un dispositif de consommation.

En outre, comme utilisées dans la présente, les expressions « correction chromatique » et « gradation chromatique » font référence de manière interchangeable au processus créatif pendant la post-production pour ajuster les couleurs de sorte que l'image exprime l'intention créative.

De plus, comme utilisée dans la présente, l'expression « maître » fait référence à un contenu d'affichage re-formé, où le contenu d'affichage est re-formé pour une gamme chromatique particulière telle que, par exemple, RCG ou CG2.

Également, comme utilisé dans la présente, le terme « métadonnées » fait référence à des données telles que, par exemple, des valeurs entières, des valeurs non entières et/ou des valeurs booléennes, utilisées pour commander, démarrer ou arrêter des mécanismes de traitement chromatique, et modifier la fonctionnalité de ceux-ci. En outre, des métadonnées peuvent comprendre une description d'une table de mappage.

Par exemple, dans un mode de réalisation, une table de mappage chromatique pourrait être réalisée au moyen d'une 3-D LUT (table de consultation tridimensionnelle). Cette LUT est utilisé pour recevoir trois valeurs d'entrée, chaque valeur représentant un composant chromatique, rouge, vert ou bleu, et produisant un triplet prédéfini de valeurs de sortie, par exemple, rouge, vert et bleu, pour chaque triplet d'entrée rouge, vert et bleu individuel. Dans ce cas, les métadonnées de la création de contenu au consommateur devraient alors comprendre une description de LUT.

Un autre mode de réalisation peut impliquer la description d'une fonction de mappage telle que, par exemple, une circuiterie et/ou ainsi de suite pour réaliser un « GOG » (gain, décalage, Gamma), qui est défini comme suit :

$$\text{Vsortie} = \text{Gain}*(\text{décalage} + \text{Ventrée})\text{\textasciicircum}\text{Gamma},$$

pour chaque composant chromatique.

Dans ce cas, les métadonnées devraient comprendre 9 valeurs, un ensemble de gain, décalage et Gamma pour chacun des trois composants chromatiques.

Bien entendu, les présents principes ne sont pas limités aux modes de réalisation précédents et, étant donné les enseignements des présents principes fournis dans la présente, d'autres modes de réalisation impliquant d'autres mises en oeuvre de métadonnées sont facilement envisagées par l'homme du métier dans cet art et les arts connexes.

De plus, comme utilisée dans la présente, l'expression « correction chromatique » fait référence à une procédure créative pour choisir manuellement les couleurs correctes (préférées) sur le côté de création de contenu (par opposition au côté de consommation du client). En conséquence, l'expression « module de correction chromatique » et les expressions similaires font référence à la structure nécessaire pour un coloriste afin de corriger manuellement ces couleurs. Ainsi, une telle structure peut impliquer une interface présentée au coloriste telle qu'une interface utilisateur graphique (GUI), des moyens de sélection pour permettre au coloriste de faire des sélections concernant, par exemple, des couleurs à remplacer et/ou modifier, et des moyens de mise en oeuvre pour mettre en oeuvre les sélections faites par le coloriste. Les moyens de sélection peuvent comprendre un ou plusieurs parmi les suivants : un clavier ; un pavé ; une souris ; des boutons ; des commutateurs ; et ainsi de suite.

Comme noté ci-dessus, les présents principes concernent un procédé et un système pour une correction chromatique afin d'obtenir des résultats prévisibles sur des affichages avec des gammes chromatiques différentes. Les présents principes corrigent des différences sur des couleurs entre des affichages cibles différents. Il faut être conscient que les présents principes concernent un contenu actuel (par exemple, des types et des technologies de codage) et des affichages actuels (par exemple, des types d'affichage, et des différences entre ceux-ci, ainsi que des types d'affichage différents, provenant, par exemple, d'un matériel, d'un logiciel et ainsi de suite) ainsi qu'un contenu et des affichages futurs, lorsqu'ils sont liés à l'utilisation de gammes chromatiques différentes.

Dans un mode de réalisation, les présents principes peuvent être utilisés pour traiter un problème exemplaire où une correction chromatique doit être réalisée sur un affichage avec une gamme chromatique de référence, cependant, les couleurs corrigées doivent être affichées sur un affichage avec une gamme chromatique différente de la gamme chromatique de référence utilisée pour la correction chromatique.

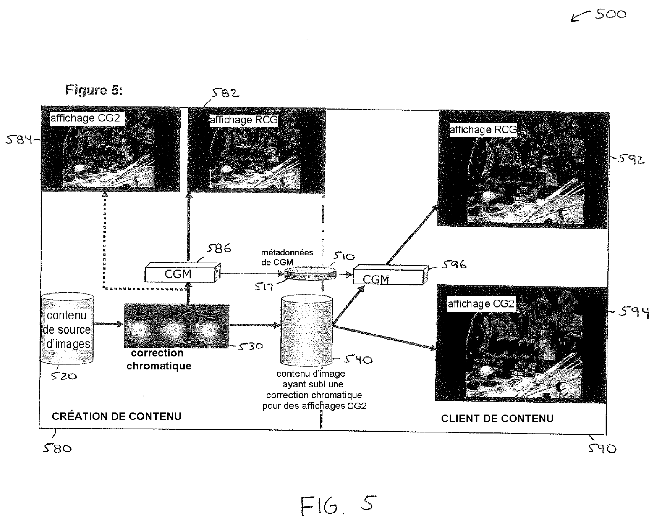

En référence à la figure 5, un diagramme de haut niveau représentant le exemple de flux de production pour une correction chromatique afin d'obtenir un maître pour des affichages CG2 et des métadonnées pour des affichages RCG est indiqué généralement par le numéro de référence 500.

Le flux de production de correction chromatique 500 implique un côté de création de contenu 580 et un côté de consommation de contenu 590. La correction chromatique 530 est faite sur la base d'une gamme chromatique pour des affichages CG2. Un affichage CG2 584 doit être directement rattaché à l'outil de correction chromatique. Un CGM 586 est utilisé pour mapper le contenu depuis une gamme chromatique pour l'affichage sur un affichage CG2 584 vers une gamme chromatique pour l'affichage sur un affichage RCG 582, et le contenu d'image résultant est ensuite utilisé pour la distribution/stockage dans un magasin de contenus d'image ayant subi une correction chromatique 540. Un

7

affichage RCG 592 et un affichage CG2 594 sont utilisés sur le côté de consommation de contenu 590.

Dans le mode de réalisation, l'utilisation des présents principes fournit une différence chromatique contrôlable entre le contenu affiché sur l'affichage RCG 592 et l'affichage CG2 594 sur le côté de consommation de contenu 590. Comme noté ci-dessus, le mode de réalisation implique l'utilisation d'un maître, c'est-à-dire, d'une version de contenu re-formé, pour (une utilisation par) des affichages CG2 et des métadonnées 510 pour (une utilisation par) des affichages RCG.

Les métadonnées 510 décrivent une transformation d'un contenu d'image ayant subi une correction chromatique pour des affichages CG2, en des couleurs destinées à des affichages RCG. Ainsi, les métadonnées 510 peuvent décrire, par exemple, la différence entre les couleurs pour un affichage CG2 et un affichage RCG.

Le contenu d'images source peut être stocké, par exemple, dans un magasin de contenu d'images source 520. Le contenu d'image ayant subi une correction chromatique peut être stocké, par exemple, dans un magasin de contenu d'image ayant subi une correction chromatique 540. Les métadonnées 510 peuvent être stockées, par exemple, dans un magasin de métadonnées 517.

Un module de correction chromatique 530 est utilisé pour créer le maître CG2 en choisissant les couleurs correctes. Ceci peut être fait par un coloriste dans un dispositif d'intermédiaires numériques.

Sur le côté de création de contenu 580, le contenu re-formé CG2 et les métadonnées pour les affichages RCG sont appliqués à un module CGM 586 qui réalise un mappage de gamme chromatique de sorte que le contenu re-formé CG2 est corrigé chromatiquement pour l'affichage sur l'affichage RCG 582.

Sur le côté de consommation de contenu 590, le contenu re-formé CG2 et les métadonnées 510 pour les affichages RCG sont appliqués à un module CGM 596 qui réalise un mappage de gamme chromatique de sorte que le contenu re-formé CG2 est corrigé chromatiquement pour l'affichage sur l'affichage RCG 592. Le module CGM 596 reçoit des informations au sujet d'une description de transformation au moyen des métadonnées 510. Ces métadonnées 510 sont déduites de la description de transformation utilisée dans le CGM 586 sur le côté de création de contenu.

De plus, sur le côté de consommation de contenu 590, le contenu re-formé CG2 est fourni directement à l'affichage CG2 594 sans utiliser ou demander les métadonnées 510 ou un mappage de gamme chromatique.

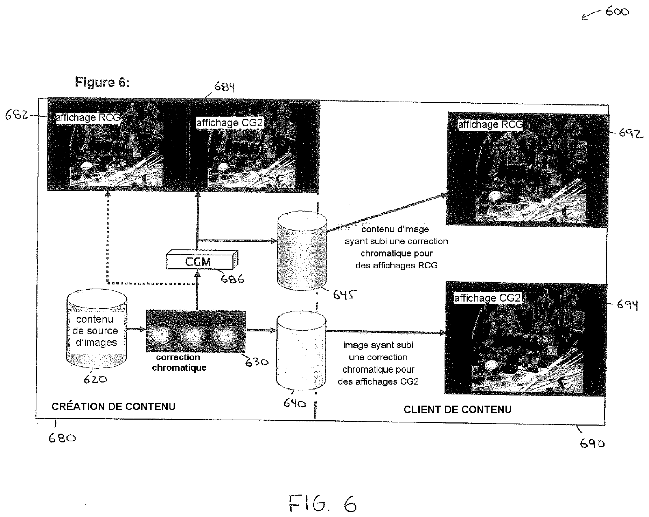

En référence à la figure 6, un diagramme de haut niveau représentant le exemple de flux de production pour une correction chromatique afin d'obtenir un maître pour des affichages CG2 et un maître pour des affichages RCG est indiqué généralement par le numéro de référence 600.

Le flux de production de correction chromatique 600 implique un côté de création de contenu 680 et un côté de consommation de contenu 690. Un affichage RCG 682 est utilisé sur le côté de création de contenu 680. De plus, un affichage CG2 684 doit être utilisé sur le côté de création de contenu 580 pour vérifier le contenu destiné à des affichages RCG de consommation. Un affichage RCG 692 et un affichage CG2 694 sont utilisés sur le côté de consommation de contenu 690.

Dans un mode de réalisation, la correction chromatique aboutira à un maître pour des affichages CG2 (tels que l'affichage CG2 694), et un maître pour des affichages RCG (tels que l'affichage RCG 692). Dans un mode de réalisation, le maître pour les affichages RCG devrait être un dérivé du maître pour des affichages CG2. L'approche de la figure 6 fournit une différence chromatique contrôlée entre un affichage CG2 de consommation et un affichage RCG 590 comme la fonctionnalité distinctive. La qualité de la précision chromatique est soumise aux descriptions CG2 utilisées pour la correction chromatique correspondant à celles utilisées sur le terrain, ou l'affichage sur le terrain étant étalonné sur la description utilisée pour une correction chromatique.

Le contenu d'images source peut être stocké, par exemple, dans un magasin de contenu d'images source 620. Le contenu d'image ayant subi une correction chromatique pour des affichages RCG, c.-à-d. le maître pour les affichages RCG, peut être stocké, par exemple, dans un magasin de contenu d'image ayant subi une correction chromatique 645. Le contenu d'image ayant subi une correction chromatique pour des affichages CG2, c.-à-d. le maître pour les affichages CG2, peut être stocké, par exemple, dans un magasin de contenu d'image ayant subi une correction chromatique 640.

Sur le côté de création de contenu, un module de correction chromatique 630 génère le maître CG2. De plus, sur le côté de création de contenu 680, le contenu re-formé CG2 est appliqué à un module CGM 686 qui réalise un mappage de gamme chromatique pour générer le maître RCG, de sorte que le contenu re-formé CG2 est corrigé chromatiquement pour l'affichage sur l'affichage RCG 682.

Sur le côté de consommation de contenu 690, le contenu re-formé RCG est fourni directement à l'affichage RCG 692 sans demander un mappage de gamme chromatique, et le contenu re-formé CG2 est fourni directement à l'affichage CG2 694 sans demander un mappage de gamme chromatique.

Il existe une description singulière pour l'affichage RCG, et cependant des descriptions multiples devront être considérées pour des affichages CG2 ainsi, dans un mode de réalisation, il serait avantageux si la version « mère » était la version pour des affichages RCG. Dans certaines circonstances, le processus de correction chromatique peut être un peu fastidieux étant donné que les couleurs sont modifiées avec un mappage non linéaire entre la correction chromatique et l'affichage de référence. Certaines couleurs peuvent ne pas changer comme prévues initialement par le coloriste. Toutefois, il n'existera pas de couleurs dans le maître qui ne peuvent pas être affichées par un affichage avec CG2, il n'existera pas non plus une couleur qui ne peut pas être affichée par un affichage RCG. Ceci est un avantage réel de cette approche.

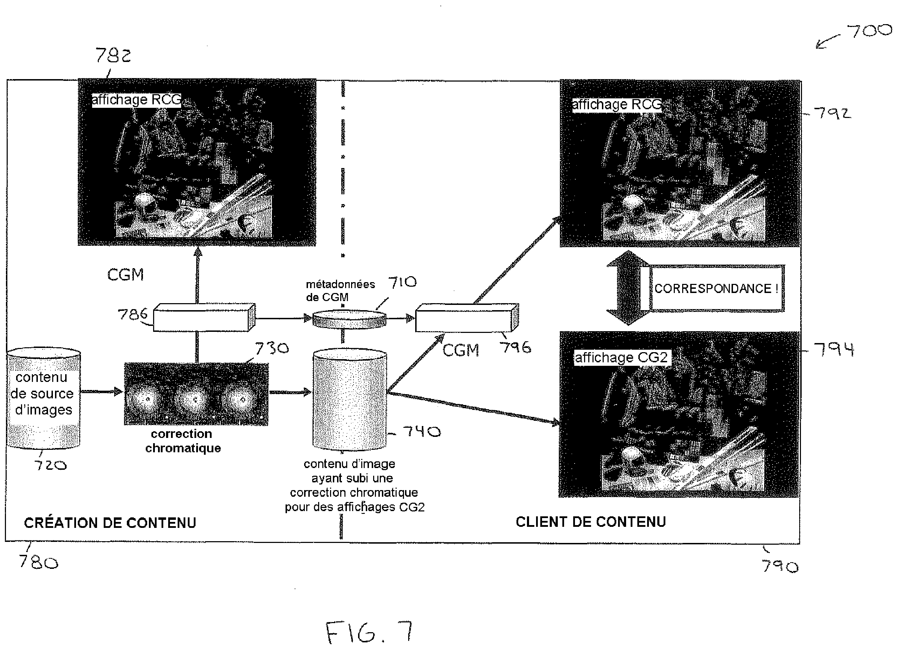

En référence à la figure 7, un diagramme de haut niveau représentant le exemple de flux de production pour une correction chromatique afin d'obtenir un maître pour des affichages CG2 et des métadonnées pour des affichages RCG est indiqué généralement par le numéro de référence 700.

Le flux de production de correction chromatique 700 implique un côté de création de contenu 780 et un côté de consommation de contenu 790. Un affichage RCG 782, utilisant une simulation CG2 par l'intermédiaire d'un module CGM 786, est utilisé sur le côté de création de contenu 780. En variante ou en outre, un affichage CG2 peut être utilisé sur le côté de création de contenu 780. Un affichage RCG 792 et un affichage CG2 794 sont utilisés sur le côté de consommation de contenu 790.

Dans le mode de réalisation, l'utilisation des présents principes fournit une correspondance chromatique substantielle entre le contenu affiché sur l'affichage RCG 792 et l'affichage CG2 794 sur le côté de consommation de contenu 790. Comme noté ci-dessus, le mode de réalisation implique l'utilisation d'un maître, c'est-à-dire, une version de contenu re-formé, pour (une utilisation par) des affichages CG2 et des métadonnées 710 pour (une utilisation par) des affichages RCG.

Les métadonnées 710 décrivent une transformation de contenu d'images source en un contenu d'image ayant subi une correction chromatique. Le contenu d'images source concerne des couleurs pour des affichages CG2 et le contenu d'image ayant subi une correction chromatique concerne des couleurs pour des affichages RCG. Ainsi, les métadonnées 710 peuvent décrire, par exemple, la différence entre les couleurs pour un affichage CG2 et un affichage RCG.

Le contenu d'images source peut être stocké, par exemple, dans un magasin de contenu d'images source 720. Le contenu d'image ayant subi une correction chromatique peut être stocké, par exemple, dans un magasin de contenu d'image ayant subi une correction chromatique 740. Les métadonnées 710 peuvent être stockées, par exemple, dans un magasin de métadonnées 717.

Un module de correction chromatique 730 génère le maître CG2 et les métadonnées pour des affichages RCG.

Sur le côté de création de contenu 780, le contenu re-formé CG2 et les métadonnées pour les affichages RCG sont appliqués à un module CGM 786 qui réalise un mappage de gamme chromatique de sorte que le contenu re-formé CG2 est corrigé chromatiquement pour l'affichage sur l'affichage RCG 782.

Sur le côté de création de contenu 790, le contenu re-formé CG2 et les métadonnées 710 pour les affichages RCG sont appliqués à un module CGM 796 qui réalise un mappage de gamme chromatique de sorte que le contenu re-formé CG2 est corrigé chromatiquement pour l'affichage sur l'affichage RCG 792.

De plus, sur le côté de consommation de contenu 790, le contenu re-formé CG2 est fourni directement à l'affichage CG2 794 sans utiliser ou demander les métadonnées 510 ou un mappage de gamme chromatique.

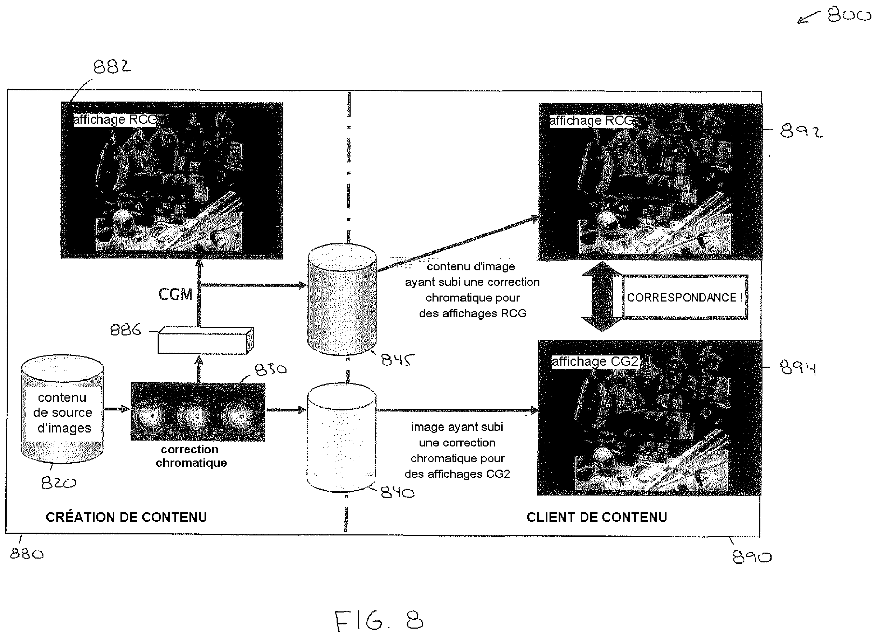

En référence à la figure 8, un diagramme de haut niveau représentant le exemple de flux de production pour une correction chromatique afin d'obtenir un maître pour des affichages CG2 et un maître pour des affichages RCG est indiqué généralement par le numéro de référence 800.

Le flux de production de correction chromatique 800 implique un côté de création de contenu 880 et un côté de consommation de contenu 890. Un affichage RCG 882 est utilisé sur le côté de création de contenu 880. Un affichage RCG 892 et un affichage CG2 894 sont utilisés sur le côté de consommation de contenu 890.

Dans un mode de réalisation, la correction chromatique aboutira à un maître pour des affichages CG2 (tels que l'affichage CG2 894), et un maître pour des affichages RCG (tels que l'affichage RCG 892). Dans un mode de réalisation, le maître pour les affichages RCG devrait être un dérivé du maître pour des affichages CG2. L'approche de la figure 8 fournit une correspondance entre un affichage CG2 de consommation et un affichage RCG. La qualité de la correspondance est soumise aux descriptions CG2 utilisées pour la correction chromatique correspondant à celles utilisées sur le terrain, ou l'affichage sur le terrain étant étalonné sur la description utilisée pour une correction chromatique.

Le contenu d'images source peut être stocké, par exemple, dans un magasin de contenu d'images source 820. Le contenu d'image ayant subi une correction chromatique pour des affichages RCG, c.-à-d. le maître pour les affichages RCG, peut être stocké, par exemple, dans un magasin de contenu d'image ayant subi une correction chromatique 845. Le contenu d'image ayant subi une correction chromatique pour des affichages CG2, c.-à-d. le maître pour les affichages CG2, peut être stocké, par exemple, dans un magasin de contenu d'image ayant subi une correction chromatique 840.

Sur le côté de création de contenu, un module de correction chromatique 830 génère le maître CG2. De plus, sur le côté de création de contenu 880, le contenu re-formé CG2 est appliqué à un module CGM 886 qui réalise un mappage de gamme chromatique pour générer le maître RCG, de sorte que le contenu re-formé CG2 est corrigé chromatiquement pour l'affichage sur l'affichage RCG 882.

Sur le côté de consommation de contenu 890, le contenu re-formé RCG est fourni directement à l'affichage RCG 892 sans demander un mappage de gamme chromatique, et le contenu re-formé CG2 est fourni directement à l'affichage CG2 894 sans demander un mappage de gamme chromatique.

Il existe une description singulière pour l'affichage RCG, et cependant des descriptions multiples devront être considérées pour des affichages CG2 ainsi, dans un mode de réalisation, il serait avantageux si la version « mère » était la version pour des affichages RCG. Dans certaines circonstances, le processus de correction chromatique peut être un peu fastidieux étant donné que les couleurs sont modifiées avec un mappage non linéaire entre la correction chromatique et l'affichage de référence. Certaines couleurs peuvent ne pas changer comme prévues initialement par le coloriste. Toutefois, il n'existera pas de couleurs dans le maître qui ne peuvent pas être affichées par un affichage avec CG2, il n'existera pas non plus une couleur qui ne peut pas être affichée par un affichage RCG. Ceci est un avantage réel de cette approche.

Sur le côté de consommation de contenu, une circuiterie sera fournie qui connecte la source de signaux avec un affichage CG2. Cette circuiterie peut être mise en oeuvre dans un matériel et/ou un logiciel, et fournit la transformation de signal pour générer la version CG2 demandée en dehors de l'image pour des affichages RCG.

Ces fonctionnalités et ces avantages et d'autres des présents principes peuvent être facilement vérifiés par l'homme du métier sur la base des enseignements de la présente. Il doit être compris que les enseignements des présents principes peuvent être mis en oeuvre sous diverses formes de matériel, de logiciel, de micrologiciel, de processeurs spécialisés ou des combinaisons de ceux-ci.

Plus préférablement, les enseignements des présents principes seront mis en oeuvre comme une combinaison de matériel et de logiciel. De plus, le logiciel peut être mis en oeuvre comme un programme d'application incorporé de manière tangible dans une unité de stockage de programme. Le programme d'application peut être téléchargé sur une machine comprenant une architecture adéquate quelconque, et exécuté par celle-ci. De préférence, la machine est mise en oeuvre sur une plate-forme informatique ayant un matériel tel qu'une ou plusieurs unités centrales (« CPU »), une mémoire vive (« RAM ») et des interfaces d'entrée/sortie (« I/O »). La plate-forme informatique peut également comprendre un système d'exploitation et un code de micro-instructions. Les divers processus et les diverses fonctions décrites dans la présente peuvent faire partie soit du code de micro-instructions, soit du programme d'application, ou d'une combinaison quelconque de ceux-ci, qui peuvent être exécutés par une CPU. De plus, diverses autres unités périphériques peuvent être connectées à la plate-forme informatique telles qu'une unité de stockage de données additionnelle et une unité d'impression.

Il doit être compris en outre que, certains des composants et des procédés du système constitutif décrits sur les dessins d'accompagnement étant de préférence mis en oeuvre dans un logiciel, les connexions réelles entre les composants du système ou les blocs de fonctions de processus peuvent différer selon la manière de laquelle les présents principes sont programmés. Étant donné les enseignements dans la présente, l'homme du métier sera en mesure d'envisager ces mises en oeuvre ou ces configurations ou similaires des présents principes.

Bien que les modes de réalisation explicatifs aient été décrits dans la présente en faisant référence aux dessins d'accompagnement, il doit être compris que les présents principes ne sont pas limités à ces modes de réalisation précis, et que divers changements et diverses modifications peuvent être effectués dans ceux-ci par l'homme du métier sans s'écarter de la portée des présents principes. Tous ces changements et ces modifications sont destinés à être compris dans la portée des présents principes comme exposés dans les revendications annexées.

## Revendications

1. Procédé pour une correction chromatique, comprenant:

une étape de réalisation d'une correction chromatique sur un contenu d'image source, à l'aide d'au moins un parmi un affichage de type non-référence (CG2) ayant une gamme chromatique de non-référence et un affichage de type référence (RCG) ayant une gamme chromatique de référence
dans laquelle ladite étape de réalisation comprend :

une étape de re-formation (530) du contenu d'image source pour fournir un contenu d'image re-formé ayant subi une correction chromatique pour l'affichage sur des affichages de type non-référence (CG2) ayant une gamme chromatique de non-référence ;
**caractérisé en ce que** ladite étape de réalisation comprend en outre :

une étape de génération (586) de métadonnées (510) pour un mappage de gamme chromatique qui transforme chromatiquement le contenu d'image re-formé ayant subi une correction chromatique pour l'affichage sur des affichages de type référence (RCG) ayant une gamme chromatique de référence, le contenu d'image source étant re-formé seulement pour les affichages de type non-référence (CG2) ayant la gamme chromatique de non-référence,
dans lequel les métadonnées (510) sont fournies aux affichages de type référence (RCG) pour une consommation finale avec le contenu d'affichage re-formé ayant subi une correction chromatique ou séparément.

**2.** Procédé selon la revendication 1, dans lequel ladite étape de réalisation de la correction chromatique comprend en outre la réalisation (586) du mappage de gamme chromatique à l'aide des métadonnées (510) pour vérifier un résultat de la correction chromatique, lorsque le contenu d'affichage est rendu sur l'affichage de type référence (RCG).

**3.** Procédé selon l'une quelconque des revendications 1 à 2, dans lequel le mappage de gamme chromatique (586, 596) est appliqué pendant ladite correction chromatique (586) et pendant une étape ultérieure de correction chromatique (596) lors de la consommation finale par un client.

**4.** Procédé selon l'une quelconque des revendications 1 à 3, dans lequel les affichages de type référence (RCG) et les affichages de type non-référence (CG2) sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

**5.** Procédé selon l'une quelconque des revendications 1 à 4, dans lequel le contenu d'image re-formé ayant subi une correction chromatique pour l'affichage sur les affichages de type référence (RCG) ayant la gamme chromatique de référence est utilisé directement par un dispositif de client.

**6.** Système pour une correction chromatique, comprenant :

un module de correction chromatique (530) pour réaliser une correction chromatique sur un contenu d'image source, à l'aide d'au moins un parmi un affichage de type non-référence (CG2) ayant une gamme chromatique de non-référence et un affichage de type référence (RCG) ayant une gamme chromatique de référence, pour fournir un contenu d'image re-formé ayant subi une correction chromatique pour l'affichage sur les affichages de type non-référence (CG2) ayant une gamme chromatique de non-référence ; et
**caractérisé en ce qu'**il comprend en outre
un module de mappage de gamme chromatique (586) pour réaliser un mappage de gamme chromatique afin de générer des métadonnées (510) pour un mappage de gamme chromatique ultérieur qui transforme chromatiquement le contenu d'image re-formé ayant subi une correction chromatique pour l'affichage sur des affichages de type référence (RCG) ayant une gamme chromatique de référence,
dans lequel le contenu d'image source est re-formé seulement pour les affichages de type non-référence (CG2) ayant la gamme chromatique de non-référence.
dans lequel les métadonnées (510) sont fournies aux affichages de type référence (RCG) pour une consommation finale avec le contenu d'affichage re-formé ayant subi une correction chromatique ou séparément.

**7.** Système selon la revendication 6, dans lequel les affichages de type référence (RCG) et les affichages de type non-référence (CG2) sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

**8.** Système selon l'une quelconque des revendications 6 à 7, dans lequel le contenu d'image re-formé ayant subi une correction chromatique pour l'affichage sur les affichages de type référence (RCG) ayant la gamme chromatique de référence est utilisé directement par un dispositif de client.

**9.** Système selon l'une quelconque des revendications 6 à 8, dans lequel les affichages de type référence (RCG) et les affichages de type non-référence (CG2) sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

**10.** Système selon l'une quelconque des revendications 6 à 9, dans lequel le contenu d'image re-formé ayant subi une correction chromatique pour l'affichage sur les affichages de type référence (RCG) ayant la gamme chromatique de référence est un dérivé du contenu d'image re-formé ayant subi une correction chromatique pour l'affichage sur les affichages de type non -référence (CG2) ayant la gamme chromatique de non-référence.

**11.** Produit programme d'ordinateur comprenant des instructions qui, lorsque le programme est exécuté par un ordinateur, conduisent celui-ci à mettre en oeuvre les étapes du procédé selon l'une quelconque des revendications 1 à 5.

**12.** Support d'enregistrement lisible par ordinateur comprenant des instructions qui, lorsqu'elles sont exécutées par un ordinateur, conduisent celui-ci à mettre en oeuvre les étapes du procédé selon l'une quelconque des revendications 1 à 5.

**Patentansprüche**

**1.** Verfahren für eine Farbkorrektur, das umfasst:
einen Schritt zur Vornahme einer Farbkorrektur an einem Inhalt eines Quellbildes, mit Hilfe von mindestens einer Anzeige unter einer Anzeige vom Nicht-Referenz-Typ (CG2), die einen Nicht-Referenz-Farbbereich hat, und einer Anzeige vom Referenz-Typ (RCG), die einen Referenz-Farbbereich hat,
in welchem der besagte Schritt zur Vornahme umfasst:

einen Schritt zur Neubildung (530) des Inhalts eines Quellbildes, um einen neugebildeten Bildinhalt zu liefern, der einer Farbkorrektur unterzogen wurde, für die Anzeige auf Anzeigen vom Nicht-Referenz-Typ (CG2), die einen Nicht-Referenz-Farbbereich haben;
**dadurch gekennzeichnet, dass** der besagte Schritt zur Vornahme des Weiteren umfasst:

einen Schritt zur Erzeugung (586) von Metadaten (510) für eine Farbbereich-Abbildung, der den neugebildeten Bildinhalt, der einer Farbkorrektur unterzogen wurde, farblich umwandelt, für die Anzeige auf Anzeigen vom Referenz-Typ (RCG), die einen Referenz-Farbbereich haben,
wobei der Inhalt eines Quellbildes nur für die Anzeigen vom Nicht-Referenz-Typ (CG2), die einen Nicht-Referenz-Farbbereich haben, neugebildet wird,
in welchem die Metadaten (510) an die Anzeigen vom Referenz-Typ (RCG) geliefert werden, für einen Endverbrauch mit dem neugebildeten Anzeigeinhalt, der einer Farbkorrektur unterzogen wurde, oder getrennt.

**2.** Verfahren nach Anspruch 1, in welchem der besagte Schritt zur Vornahme der Farbkorrektur des Weiteren die Vornahme (586) der Farbbereich-Abbildung mit Hilfe der Metadaten (510) umfasst, um ein Ergebnis der Farbkorrektur zu überprüfen, wenn der Anzeigeinhalt auf der Anzeige vom Referenz-Typ (RCG) wiedergegeben wird.

**3.** Verfahren nach einem der Ansprüche 1 bis 2, in welchem die Farbbereich-Abbildung (586, 596) während der besagten Farbkorrektur (586) und während eines nächsten Schritts zur Farbkorrektur (596) während des Endverbrauchs durch einen Kunden angewandt wird.

**4.** Verfahren nach einem der Ansprüche 1 bis 3, in welchem die Anzeigen vom Referenz-Typ (RCG) und die Anzeigen vom Nicht-Referenz-Typ (CG2) mindestens eine Anzeige unter den Flüssigkristallanzeigen, Plasmaanzeigen, Kathodenstrahlröhren-Anzeigen, Digital-Light-Processing-Anzeigen, organischen Leuchtdioden-Anzeigen, Silizium-Flüssigkristallanzeigen und Bildverstärkeranzeigen mit Direktanschluss sind.

**5.** Verfahren nach einem der Ansprüche 1 bis 4, in welchem der neugebildete Bildinhalt, der einer Farbkorrektur für die Anzeige auf den Anzeigen vom Referenz-Typ (RCG), die den Referenz-Farbbereich haben, unterzogen wurde, direkt durch ein Gerät des Kunden verwendet wird.

**6.** Vorrichtung für eine Farbkorrektur, die umfasst:
ein Modul zur Farbkorrektur (530), um eine Farbkorrektur an einem Inhalt eines Quellbildes vorzunehmen, mit Hilfe von mindestens einer Anzeige unter einer Anzeige vom Nicht-Referenz-Typ (CG2), die einen Nicht-Referenz-Farbbereich hat, und einer Anzeige vom Referenz-Typ (RCG), die einen Referenz-Farbbereich hat, um einen neugebildeten Bildinhalt zu liefern, der einer Farbkorrektur unterzogen wurde, für die Anzeige auf den Anzeigen vom Nicht-Referenz-Typ (CG2), die einen Nicht-Referenz-Farbbereich haben; und

**dadurch gekennzeichnet, dass** sie des Weiteren umfasst
ein Modul zur Farbbereich-Abbildung (586) für die Vornahme einer Farbbereich-Abbildung, um Metadaten (510) für eine anschließende Farbbereich-Abbildung zu erzeugen, das den neugebildeten Bildinhalt, der einer Farbkorrektur unterzogen wurde, farblich umwandelt, für die Anzeige auf Anzeigen vom Referenz-Typ (RCG), die einen Referenz-Farbbereich haben,

in welcher der Inhalt eines Quellbildes nur für die Anzeigen vom Nicht-Referenz-Typ (CG2), die den Nicht-Referenz-Farbbereich haben, neugebildet wird,

in welcher die Metadaten (510) an die Anzeigen vom Referenz-Typ (RCG) geliefert werden, für einen Endverbrauch mit dem neugebildeten Anzeigeinhalt, der einer Farbkorrektur unterzogen wurde, oder getrennt.

7. Vorrichtung nach Anspruch 6, in welcher die Anzeigen vom Referenz-Typ (RCG) und die Anzeigen vom Nicht-Referenz-Typ (CG2) mindestens eine Anzeige unter den Flüssigkristallanzeigen, Plasmaanzeigen, Kathodenstrahlröhren-Anzeigen, Digital-Light-Processing-Anzeigen, organischen Leuchtdioden-Anzeigen, Silizium-Flüssigkristallanzeigen und Bildverstärkeranzeigen mit Direktanschluss sind.

8. Vorrichtung nach einem der Ansprüche 6 bis 7, in welcher der neugebildete Bildinhalt, der einer Farbkorrektur für die Anzeige auf den Anzeigen vom Referenz-Typ (RCG), die einen Referenz-Farbbereich haben, unterzogen wurde, direkt durch ein Gerät eines Kunden verwendet wird.

9. Vorrichtung nach einem der Ansprüche 6 bis 8, in welcher die Anzeigen vom Referenz-Typ (RCG) und die Anzeigen vom Nicht-Referenz-Typ (CG2) mindestens eine Anzeige unter den Flüssigkristallanzeigen, Plasmaanzeigen, Kathodenstrahlröhren-Anzeigen, Digital-Light-Processing-Anzeigen, organischen Leuchtdioden-Anzeigen, Silizium-Flüssigkristallanzeigen und Bildverstärkeranzeigen mit Direktanschluss sind.

10. Vorrichtung nach einem der Ansprüche 6 bis 9, in welcher der neugebildete Bildinhalt, der einer Farbkorrektur für die Anzeige auf den Anzeigen vom Referenz-Typ (RCG), die den Referenz-Farbbereich haben, unterzogen wurde, ein Derivat des neugebildeten Bildinhalts ist, der einer Farbkorrektur für die Anzeige auf den Anzeigen vom Nicht-Referenz-Typ (CG2), die den Nicht-Referenz-Farbbereich haben, unterzogen wurde.

11. Computerprogrammprodukt, das Anweisungen umfasst, die, wenn das Programm durch einen Computer ausgeführt wird, diesen lenken, die Schritte des Verfahrens nach einem der Ansprüche 1 bis 5 umzusetzen.

12. Durch Computer lesbarer Aufzeichnungsträger, der Anweisungen umfasst, die, wenn sie durch einen Computer ausgeführt werden, diesen lenken, die Schritte des Verfahrens nach einem der Ansprüche 1 bis 5 umzusetzen.

**Claims**

1. Method for a colour correction, comprising:

a step for performing a colour correction on source picture content, using at least one of a non-reference type display (CG2) having a non-reference colour gamut and a reference type display (RCG) having a reference colour gamut

wherein said performing step comprises:

a mastering step (530) of the source picture content to provide mastered colour corrected picture content for display on non-reference type displays (CG2) having a non-reference colour gamut,

**characterised in that** said performing step also comprises:

a metadata (510) generating step (586) for a colour gamut mapping that colour transforms the mastered colour corrected picture content for display on reference type displays (RCG) having a reference colour gamut,

the source picture content being mastered only for the non-reference type displays (CG2) having the non-reference colour gamut,

wherein the metadata (510) is provided to the reference type displays (RCG) for final consumption with the mastered colour corrected or separately corrected picture content.

2. Method according to claim 1, wherein said performing step of the colour correction further comprises the production (586) of the colour gamut mapping using metadata (510) to check a colour correction result, when the display content is rendered on the reference type display (RCG).

3. Method according to any one of claims 1 to 2, wherein the colour gamut mapping (586, 596) is applied during said colour correction (586) and during a subsequent colour correction step (596) during the final consumption by a client.

4. Method according to any one of claims 1 to 3, wherein the reference type displays (RCG) and the non-reference type displays (CG2) are at least one of liquid crystal displays, plasma displays, cathode ray tube displays, digital light processing displays, organic light emitting diode displays, liquid crystal on silicon displays, and direct drive image light amplifier displays.

5. Method according to any one of claims 1 to 4, wherein the mastered colour corrected picture content for display on reference type displays (RCG) having the reference colour gamut is used directly by a client device.

6. System for a colour correction, comprising:

a colour correction module (530) for performing colour correction on source picture content, using at least one of a non-reference type display (CG2) having a non-reference colour gamut and a reference type display (RCG) having a reference colour gamut, to provide mastered colour corrected picture content for display on the non-reference type displays (CG2) having a non-reference colour gamut, and
**characterised in that** it further comprises
a colour gamut mapping module (586) to perform a colour gamut mapping to generate metadata (510) for a subsequent colour gamut mapping that colour transforms the mastered colour corrected picture content for display on reference type displays (RCG) having a reference colour gamut,
wherein the source picture content is mastered only for the non-reference type displays (CG2) having the non-reference colour gamut
wherein the metadata (510) is provided to the reference type displays (RCG) for final consumption with the mastered colour corrected or separately corrected picture content.

7. System according to claim 6, wherein the reference type displays (RCG) and the non-reference type displays (CG2) are at least one of liquid crystal displays, plasma displays, cathode ray tube displays, digital light processing displays, organic light emitting diode displays, liquid crystal on silicon displays, and direct drive image light amplifier displays.

8. System according to any one of claims 6 to 7, wherein the mastered colour corrected picture content for display on reference type displays (RCG) having the reference colour gamut is used directly by a client device.

9. System according to any one of claims 6 to 8, wherein the reference type displays (RCG) and the non-reference type displays (CG2) are at least one of liquid crystal displays, plasma displays, cathode ray tube displays, digital light processing displays, organic light emitting diode displays, liquid crystal on silicon displays, and direct drive image light amplifier displays.

10. System according to any one of claims 6 to 9, wherein the mastered colour corrected picture content for display on reference type displays (RCG) having the reference colour gamut is a derivative of the mastered colour corrected picture content for display on non-reference type displays (CG2) having the non-reference colour gamut.

11. Computer programme product comprising instructions that, when the programme is run by a computer, prompt it to implement the process steps according to any one of claims 1 to 5.

12. Backup medium readable by a computer comprising instructions that, when the programme is run by a computer, prompt it to implement the process steps according to any one of claims 1 to 5.

100

Legend:
- CIE1931_2deg
- Plasma 1
- Plasma 3
- Plasma 4
- CRT de client
- LCD 1
- LCD 2 (WG)
- LCOS
- ITU-R Bt 709

aire de tracé

FIG. 1

FIG. 2

FIG. 3

*400*

*482*

Affichage RCG

*494*

*420*

Contenu
de
source
d'images

Correction chromatique

*430*

Contenu
d'image
ayant subi
une
correction
chromatique

*440*

Pas de
correspondance !

Affichage RCG

Affichage CG2

*492*

Création de contenu

*480*

Client de contenu

*490*

FIG. 4

~ 500

**Figure 5:**

582

584 ~

affichage CG2

affichage RCG

affichage RCG

~ 592

~ 594

586

CGM

métadonnées
de CGM

510

517

CGM

596

contenu
de source
d'images

correction
chromatique

~ 530

contenu d'image
ayant subi une
correction chromatique
pour des affichages CG2

540

affichage CG2

520

**CRÉATION DE CONTENU**

**CLIENT DE CONTENU**

580

590

FIG. 5

← 600

Figure 6:

684

682

| affichage RCG | affichage CG2 |

692 — affichage RCG

CGM

686

contenu d'image
ayant subi une correction
chromatique pour
des affichages RCG

645

contenu
de source
d'images

correction
chromatique

630

620

image ayant subi
une correction
chromatique pour
des affichages CG2

640

694 — affichage CG2

**CRÉATION DE CONTENU**

680

**CLIENT DE CONTENU**

690

FIG. 6

EP 2 132 923 B1

FIG. 7

FIG. 8

**EP 2 132 923 B1**

## RÉFÉRENCES CITÉES DANS LA DESCRIPTION

**Documents brevets cités dans la description**

- US 60921579 B
- US 2005152612 A
- EP 1578140 A